Europäisches Patentamt

European Patent Office

Office européen des brevets

(11) Veröffentlichungsnummer: **0 363 632**
**A2**

# (12) EUROPÄISCHE PATENTANMELDUNG

(21) Anmeldenummer: **89116345.3**

(22) Anmeldetag: **05.09.89**

(51) Int. Cl.5: **B32B 15/06 , B32B 25/02 , E04B 1/86**

(30) Priorität: **13.10.88 DE 3834829**

(43) Veröffentlichungstag der Anmeldung:
**18.04.90 Patentblatt 90/16**

(84) Benannte Vertragsstaaten:
**BE DE FR GB IT NL SE**

(71) Anmelder: **Hoesch Stahl Aktiengesellschaft**
**Rheinische Strasse 173**
**D-4600 Dortmund 1(DE)**

(72) Erfinder: **Stamm, Klaus, Dr.-Ing.**
**Pottenkamp 32**
**D-4600 Dortmund 30(DE)**
Erfinder: **Tenhaven, Ulrich, Dr.-Ing.**
**Kleiner Floraweg 22**
**D-4600 Dortmund 50(DE)**

(74) Vertreter: **Sartorius, Peter, Dipl.-Ing.**
**i.Fa. Hoesch AG Eberhardstrasse 12**
**D-4600 Dortmund 1(DE)**

(54) **Widerstandsschweissbarer Verbundwerkstoff.**

(57) Die Erfindung betrifft dreischichtige Verbundwerkstoffe, deren Kunststoffkernschicht mit Ferrosilizium in geeigneter Korngröße und in geeignetem
Volumenanteil so gleichmäßig angereichert ist, daß
Verbundwerkstoffe sowohl untereinander als auch
mit Vollblech durch Widerstandsschweißung miteinander unlösbar verbunden werden können. Dieses
trifft sowohl für Verbundwerkstoffe mit viskoelastischer als auch mit schubsteifer Kernschicht zu.

F i g u r 1

EP 0 363 632 A2

## Widerstandsschweißbarer Verbundwerkstoff

Die Erfindung betrifft Verbundwerkstoffe aus in der Regel zwei Stahlblechdeckschichten und einer Kunststoffzwischenschicht. Diese Kunststoffzwischenschicht oder -kernschicht besteht vorzugsweise aus viskoelastischen oder schubsteifen Kunststoffen.

Verbundwerkstoffe mit einer dünnen (z. B. 50 - 200 μm) und viskoelastischen Kunststoff-Zwischenschicht wirken schwingungs- und körperschalldämpfend und finden überall dort Anwendung, wo es um Lärmbekämpfung geht, insbesondere um die Verminderung von Körperschallausbreitung und Luftschallabstrahlung. Als Anwendungsbeispiele sind der Fahrzeugbau, die Hausgeräteindustrie und der Maschinenbau zu nennen.

Verbundwerkstoffe mit einer relativ dickeren (z. B. 200 -1000 μm) und schubsteifen Kunststoff-Zwischenschicht haben ein geringeres Flächengewicht als ein Stahlblech gleicher Steifigkeit oder sind steifer als ein gleichschweres Stahlblech und sind überall dort mit Erfolg einsetzbar, wo es auf geringes Gewicht bei gleichzeitig hoher Steifigkeit ankommt. Diese Verbundwerkstoffe finden ihre Anwendung im Flugzeug-und Karrosseriebau.

Die praktische Anwendbarkeit der beschriebenen Verbundwerkstoffe hängt weitestgehend von ihren Verarbeitungseigenschaften beim Trennen, Umformen und Fügen ab. Die meisten Verarbeitungsverfahren bereiten keine Schwierigkeiten prinzipieller Natur; es sind lediglich gegenüber gleichsteifem Vollblech veränderte Werkzeug- und Maschinenparameter zu berücksichtigen. Grundsätzlich anders hingegen ist die Situation beim elektrischen Widerstandsschweißen als einem der verbreitetsten und wirtschaftlichsten Fügeverfahren in der industriellen Fertigungstechnik, weil hier infolge der elektrisch isolierenden Kunststoff-Zwischenschicht im Falle von Verbundwerkstoffen mit viskoelastischer Zwischenschicht - im Unterschied zu Vollblech - ein elektrischer Stromfluß nur mit umständlichen Sondermaßnahmen zu erreichen ist. Im Falle von Verbundwerkstoffen mit schubsteifer Zwischenschicht kommt sogar nicht einmal dann ein Stromfluß zustande. Punkt- und Rollennahtschweißen ist daher sehr aufwendig bzw. überhaupt nicht möglich.

Eine Sondermaßnahme besteht bei viskoelastischen Zwischenschichten darin, vor jeder Punktschweißung einen elektrischen Nebenschluß z. B. durch eine Metallklemme oder einen Körnerpunkt oder den jeweils vorausgegangenen Schweißpunkt zu erzeugen. Der durch den Nebenfluß fließende Strom erwärmt örtlich die Deckbleche und somit auch die Kunststoff-Zwischenschicht; diese erweicht, so daß nunmehr die Elektrodendruckkraft ausreicht, die Zwischenschicht beiseite zu drücken, beide Deckbleche direkt in Berührung zu bringen und die Punktverschweißung damit auszulösen. Diese sukzessive "Punkt-nach-Punkt-Verfahren" ist jedoch z. B. im Karrosseriebau, wo in getakteten Schweißstraßen bis zu 20 Schweißpunkte auf einmal gesetzt werden, kaum anwendbar.

Es hat daher nicht an Überlegungen gefehlt, durch geeignete Maßnahmen das elektrische Widerstandsschweißen von Schichtverbundwerkstoff ähnlich problemlos wie bei der Verschweißung von Vollblech zu gestalten. Eine naheliegende Maßnahme besteht z. B. darin, die Kunststoff-Zwischenschicht vor der Verbundblechherstellung mit elektrisch leitenden Pigmenten aus geeignetem Material von geeigneter Kornform, geeigneter Korngröße bzw. Kornfraktion und geeignetem Volumenanteil zu versehen. So ist z. B. bekannt geworden, daß einige Verbundblechhersteller der Kunststoff-Zwischenschicht Nickelpulver bzw. Graphitpulver beimischen, wodurch in der Tat punktschweißbare Schichtverbundwerkstoffe erhalten werden. Die Nachteile dieser Verfahren sind groß und lassen sich nicht in allen Bereichen anwenden:

Die Anwendung dieser Verfahren ist z. B. nur auf sehr dünne Zwischenschichten beschränkt.

Nickelpulver ist ungewöhnlich teuer und mit einer Wichte 8,9 kg/dm$^3$ relativ schwer, was insbesondere bei Leichtbau-Verbundblechen ein großer Nachteil ist. Ein weiterer Nachteil ist der Nickeldampf, der beim Schweißen immer entsteht und nach der TRK nicht zugelassen ist.

Graphitpulver muß wegen seines hohen elektrischen Übergangswiderstandes in hohem Volumenanteil (von 15 - 25 Volumenprozent) beigegeben werden, wodurch sich einige Eigenschaften der Kunststoff-Zwischenschicht wie Haftung zum Deckblech, Dämpfungsfaktor, Schubsteifigkeit und Herstellbarkeit sowie die Güte des Schweißpunktes durch Aufkohlung wesentlich verschlechtern. Ferner ist keine identische Reproduzierbarkeit der Schweißpunkte zu erreichen. Die Ausfallrate ist größer als 10 %.

In einem Aufsatz von Akihiko Nishimoto et al unter dem Titel "Weldable Vibration Damping Steel Sheet", abgedruckt in der NKK Technical Review Nr. 53 (1988) Seite 10 - 18 wird eingehend auf die Problematik des Widerstandsschweißens bei der Verarbeitung von Schichtverbundwerkstoffen eingegangen.

Darüber hinaus sind mit der DE-OS 34 26 770 schweißbare Dichtungsmassen zur Verbindung von Metallteilen untereinander bekannt geworden.

Die Aufgabe der Erfindung besteht darin, durch geeignete technische Maßnahmen Verbundwerkstoffe derart zu entwickeln, daß sowohl körperschalldämpfende Verbundbleche als auch Leichtbau-Verbundbleche ähnlich wie Vollblech elektrisch widerstandsgeschweißt werden können.

Die Aufgabe wird dadurch gelöst, daß die Kunststoffzwischenschicht mit elektrisch leitenden Pigmenten wie Ferrosilizium in bestimmten Volumenprozenten und Korngrößen soweit gleichmäßig verteilt angereichert wird, daß der Verbundwerkstoff widerstandsschweißbar ist.

Umfangreiche Versuche haben gezeigt, daß andere Verfahren als die Einmischung elektrisch leitender Pigmente in die Kunststoff-Zwischenschicht wie z. B. die Verwendung von elektrisch leitenden Kunststofftypen, die Verwendung von Elektroden mit Körnerspitze oder die Verwendung von Deckblechen mit Riffelung bzw. "höckerförmiger" Prägung nicht zum Ziele führen.

Die wenigen elektrisch leitenden Kunststoffe, die es gibt, haben keinen ausreichenden Verlustfaktor, haften nicht ohne zusätzlichen Kleber an den Deckblechen, sind sehr teuer und haben zudem einen hohen elektrischen Übergangswiderstand. Sie kommen deshalb für schweißbare Verbundwerkstoffe nicht in Betracht.

Elektroden mit Körnerspitzen aus Wolfram führten - obwohl ausreichend tiefe Körnerpunkte entstanden - zu keiner Punktverschweißung, weil es bereits in der Niedrigstrom-Vorwärmphase zu einem Abschmelzen der Körnerspitzen kam. Bei Schichtverbundwerkstoffen mit einem glatten und einem "gehöckerten" Deckblech fanden zwar aufgrund des elektrischen Kontaktes zwischen "Höckerspitzen" und glattem Gegenblech Punktverschweißungen statt, jedoch sehr oft nicht an der gewünschten Stelle, wo die Elektroden angesetzt waren, sondern z. T. auch an benachbarten "Höckerpunkten", wo - bedingt durch unvermeidliche Maßtoleranzen - zufällig ein niedrigerer Stromwiderstand herrschte und der Schweißvorgang daher dort zuerst ausgelöst wurde.

Aufgrund dieser Negativergebnisse wurden nun Versuche an Verbundblechen mit unterschiedlich pigmentierten Kunststoff-Zwischenschichten durchgeführt. Auch hier stellten sich teilweise negative Resultate ein: Verschiedene Metallpulver wie Aluminium, Eisen oder Magnesium führten zu überhaupt keiner Schweißbarkeit; die Oxidschicht auf den Kornoberflächen war zu stark. Andere Metallpulver wie z. B. Edelstahl oder Nickel erfüllten zwar die Zielvorgabe der Schweißbarkeit ohne Nebenschluß, wiesen jedoch andere, bereits genannte Nachteile auf.

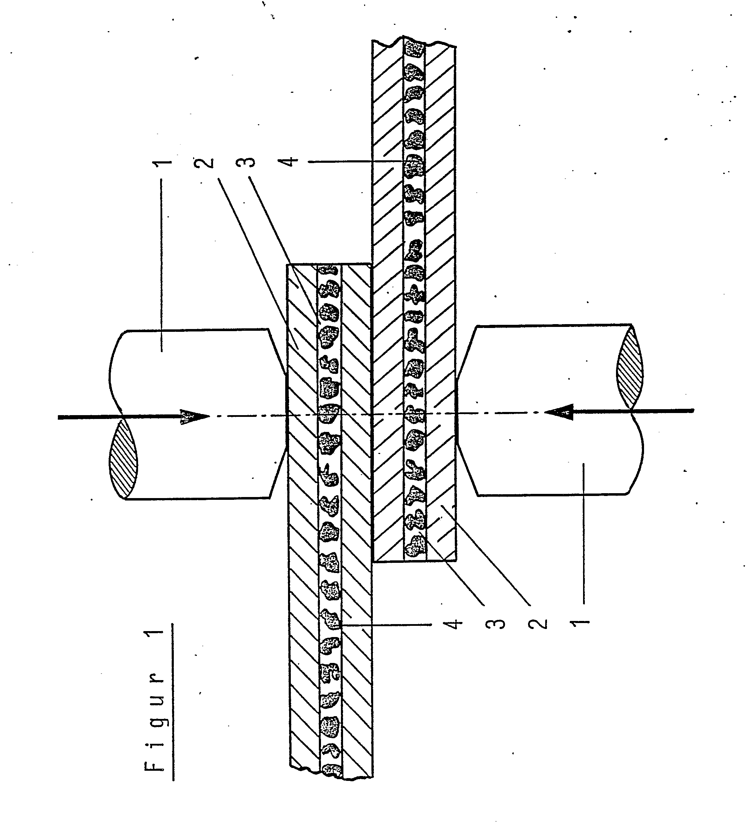

Die Fig. 1 zeigt ein mögliches Beispiel einer Widerstandschweißung von Verbundwerkstoffen. Zwischen den Schweißelektroden (1) sind die zu verschweißenden Verbundwerkstoffe eingespannt. Die beiden Verbundwerkstoffe sind gleich und bestehen aus je zwei Decklagen Stahlblech (2) und je einer Kunststoffkernschicht (3). Diese Kunststoffkernschicht (3) ist mit Kornfraktionen (4) aus einer Ferrolegierung, vorzugsweise Ferrosilizium, in geeigneten Volumenanteilen angereichert.

Die infolge des Mahlvorgangs gebrochene Kornform des Ferrosiliziumpulvers, die sich deutlich von der sphärischen Kornform von Nickelpulver unterscheidet, wirkt sich auf die elektrische Widerstandsschweißbarkeit nicht nachteilig aus. Die Tatsache, daß die maximale Korngröße der Kornfraktion um bis zu 30 % größer ist als die Kernschichtdicke, ist kein Widerspruch. Infolge des Anpreßdruckes bei der Verbundblechherstellung brechen herausragende Spitzen oder Ecken des Einzelkorns z. T. ab oder drücken sich leicht in das Deckblech ein, so daß die Soll-Kernschichtdicke exakt eingehalten wird.

Das gemahlene Ferrosiliziumpulver in geeigneter Kornfraktion und in geeignetem Volumenanteil erfüllt somit alle Ansprüche, die eine 100 %ige Punktschweißbarkeit gewährleisten, und zwar ohne die Nachteile, die für andere Pigmentierungen - wie vorangehend erläutert - bestehen. Die reproduzierbare Schweißpunktgüte steht einem normalen Stahlblech nicht nach. Mit einer Wichte von 2,8 kg/dm$^3$ ist Ferrosilizium sehr leicht, verursacht beim Schweißvorgang keine gesundheitsschädlichen Dämpfe und ist ohne negative Rückwirkung auf die Schweißpunktgüte verarbeitbar.

Verbundbleche der vorgenannten Art können somit problemlos untereinander sowie auch mit Vollblech punktgeschweißt werden.

## Ansprüche

1. Widerstandsschweißbarer, dreischichtiger schwingungsdämpfender Verbundwerkstoff, der aus zwei Stahldeckblechen und dazwischen liegender viskoelastischer Kunststoffkernschicht besteht und dreischichtiger Verbundwerkstoff mit geringem Flächengewicht und schubsteifer Kunststoffkernschicht, dadurch gekennzeichnet, daß die Kunststoffkernschicht Pulver einer Ferrolegierung, vorzugsweise Ferrosilizium, in einer Menge von mindestens 3 Volumenprozenten und in Korngrößen von 70 bis 130 % der Dicke der Kunststoffschicht in gleichmäßiger Verteilung enthält.

2. Widerstandsschweißbarer dreischichtiger Verbundwerkstoff nach Anspruch 1, dadurch gekennzeichnet, daß die Kunststoffkernschicht Ferrosiliziumpulver in einer Menge von 5 bis 10 Volumenprozent enthält.

3. Widerstandsschweißbarer dreischichtiger Verbundwerkstoff nach den Ansprüchen 1 und 2, dadurch gekennzeichnet, daß die Kunststoffkernschicht Ferrosiliziumpulver in Korngrößen von 90 bis 120 % der Dicke der Kunststoffschicht enthält.

Figur 1

EP 0 363 632 A2